# EUROPEAN PATENT APPLICATION

(11) **EP 4 836 336 A1**
(43) Date of publication of application: **04.11.2026**
(21) Application number: 23962816.7
(22) Date of filing: 29.12.2023
(51) Int. Cl.: H04L 5/00, G06N 3/08, H04B 7/06

(54) **BEAM MANAGEMENT CONFIGURATION METHOD AND APPARATUS**

(71) Applicant: 1FINITY INC., Kawasaki-shi, Kanagawa 211-8588 (JP)
(72) Inventor: WANG, Guotong, Beijing 100022 (CN); WANG, Xin, Beijing 100022 (CN); JIN, Liqiang, Beijing 100022 (CN); SUN, Gang, Beijing 100022 (CN); ZHANG, Qun, Beijing 100022 (CN)
(74) Representative: Haseltine Lake Kempner LLP
(86) International application number: PCT/CN2023/143360
(87) International publication number: WO 2025/138142

(57) **Abstract**

The embodiments of the present application provide a beam management configuration method and apparatus. The beam management configuration method comprises: a terminal equipment receives configuration information for beam management based on an Al/ML functionality/model from a network device; and the terminal equipment performs configuration for a carrier aggregation operation and/or a multi-TRP operation.

## Description

### TECHNICAL FIELD

Embodiments of the present application relate to the field of communications technologies.

### BACKGROUND

In NR Rel-18, artificial intelligence or machine learning (AI/ML) for an air interface has been studied. AI/ML may be used for the following use cases: Channel State Information (CSI) feedback enhancement, beam management, and positioning enhancement. The CSI feedback enhancement may include CSI prediction and CSI compression; the beam management may include spatial beam prediction and temporal beam prediction; and the positioning enhancement may include direct positioning and AI/ML assisted positioning.

In some sub use cases, a bilateral model may be used, where an AI/ML model operates on both a terminal equipment side and a network device side. In some other sub use cases, a unilateral model may be used, where the AI/ML model operates on either a terminal equipment side or a network device side. For beam management, the AI/ML model may operate on the terminal equipment side and/or the network device side.

It should be noted that, the above introduction to the background is merely for the convenience of clear and complete description of the technical solution of the present application, and for the convenience of understanding of persons skilled in the art. It cannot be regarded that the above technical solution is commonly known to persons skilled in the art just because that the solution has been set forth in the background of the present application.

### SUMMARY

The inventor finds that a terminal equipment and/or a network device are/is able to predict beams by utilizing an AI/ML functionality/model and based on a beam measurement result, but there is currently no clear solution on how to consider a carrier aggregation operation and/or a multi-TRP operation.

To address at least one of the above problems, embodiments of the present application provide a beam management configuration method and apparatus.

According to an aspect of embodiments of the present application, there is provided with a beam management configuration method, including:
receiving, by a terminal equipment, configuration information for beam management based on an AI/ML functionality/model from a network device; and
performing, by the terminal equipment, configuration for a carrier aggregation operation and/or a multi-TRP operation.

According to another aspect of embodiments of the present application, there is provided a beam management configuration apparatus, including:
a receiving unit configured to receive configuration information for beam management based on an AI/ML functionality/model from a network device; and
a processing unit configured to perform configuration for carrier aggregation operation and/or a multi-TRP operation.

According to another aspect of embodiments of the present application, there is provided a beam management configuration method, including:
transmitting, by a network device, configuration information for beam management based on an AI/ML functionality/model to a terminal equipment; wherein the terminal equipment performs configuration for a carrier aggregation operation and/or a multi-TRP operation.

According to another aspect of embodiments of the present application, there is provided a beam management configuration apparatus, including:
a transmitting unit configured to transmit configuration information for beam management based on an AI/ML functionality/model to a terminal equipment; wherein the terminal equipment performs configuration for a carrier aggregation operation and/or a multi-TRP operation.

According to another aspect of embodiments of the present application, there is provided a communication system, comprising:
a network device configured to transmit configuration information for beam management based on an AI/ML functionality/model to a terminal equipment;
the terminal equipment configured to receive the configuration information for beam management based on the AI/ML functionality/model, and perform configuration for a carrier aggregation operation and/or a multi-TRP operation.

One of the beneficial effects of the embodiments of the present application is that the terminal equipment receives configuration information for beam management based on the AI/ML functionality/model from the network device, and performs configuration for a carrier aggregation operation and/or a multi-TRP operation, thereby being able to improve efficiency of beam management and enhance accuracy and reliability of beam management.

With reference to the specification and drawings below, specific embodiments of the present application are disclosed in detail, which specify the manner in which the principle of the present application may be adopted. It should be understood that, the scope of the embodiments of the present application is not limited. Within the scope of the clause of the appended claims, the embodiments of the present application include many variations, modifications and equivalents.

The features described and/or shown for one embodiment can be used in one or more other embodiments in the same or similar manner, can be combined with the features in other embodiments or replace the features in other embodiments.

It should be emphasized that, the term "include/comprise" refers to, when being used in the text, existence of features, parts, steps or assemblies, without exclusion of existence or attachment of one or more other features, parts, steps or assemblies.

### BRIEF DESCRIPTION OF THE DRAWINGS

Elements and features described in one of the drawings or embodiments of the present application may be combined with the elements and features shown in one or more other drawings or embodiments. Moreover, in the drawings, similar reference signs indicate corresponding parts in several drawings and may be used to indicate corresponding parts used in more than one embodiment.
FIG. 1 is a schematic diagram of a communication system in embodiments of the present application;
FIG. 2 is a schematic diagram of a beam management configuration method in embodiments of the present application;
FIG. 3 is a schematic diagram of a beam management method in embodiments of the present application;
FIG. 4 is an example diagram of configuring performance monitoring per CC in embodiments of the present application;
FIG. 5 is an example diagram of configuring performance monitoring by a specific CC in embodiments of the present application;
FIG. 6 is an example diagram of configuring performance monitoring by one CC in embodiments of the present application;
FIG. 7 is an example diagram of configuring performance monitoring per CC based on grouping in embodiments of the present application;
FIG. 8 is an example diagram of configuring performance monitoring per CC based on grouping in embodiments of the present application;
FIG. 9 is an example diagram of configuring performance monitoring per TRP in embodiments of the present application;
FIG. 10 is an example diagram of configuring performance monitoring by a specific TRP in embodiments of the present application;
FIG. 11 is an example diagram of configuring performance monitoring by a specific TRP in embodiments of the present application;
FIG. 12 is another schematic diagram of a beam management configuration method in embodiments of the present application;
FIG. 13 is a schematic diagram of a beam management configuration apparatus in embodiments of the present application;
FIG. 14 is a schematic diagram of a beam management configuration apparatus in embodiments of the present application;
FIG. 15 is a schematic diagram of a terminal equipment in embodiments of the present application; and
FIG. 16 is a schematic diagram of a network device in embodiment of the present application.

### DETAILED DESCRIPTION

With reference to the drawings, the foregoing and other features of the present application will become apparent through the following specification. The specification and the accompanying drawings specifically disclose the particular embodiments of the present application, showing part of embodiments in which the principle of the present application can be adopted, it should be understood that the present application is not limited to the described embodiments, on the contrary, the present application includes all modifications, variations and equivalents that fall within the scope of the appended claims.

In embodiments of the present application, the terms "first", "second", etc., are used to distinguish different elements by their appellation, but do not indicate the spatial arrangement or chronological order of these elements, etc., and these elements shall not be limited by the terms. The term "and/or" includes any and all combinations of one or more of the terms listed in association with the term. The terms "contain", "include", "have", etc., refer to the presence of the stated feature, element, component or assembly, but do not exclude the presence or addition of one or more other features, elements, components or assemblies.

In embodiments of the present application, the singular forms "one", "the", etc., including the plural forms, shall be broadly understood as "a sort of" or "a kind of" and not limited to the meaning of "one"; furthermore, the term "said" shall be understood to include both the singular form and the plural form, unless it is expressly indicated otherwise in the context. In addition, the term "according to" should be understood to mean "at least partially according to ...", and the term "based on" should be understood to mean "based at least partially on ...", unless it is expressly indicated otherwise in the context.

In embodiments of the present application, the term "communications network" or "wireless communications network" may refer to a network that complies with any of the following communication standards, such as Long Term Evolution (LTE), Enhanced Long Term Evolution (LTE-A), Wideband Code Division Multiple Access (WCDMA), High-Speed Packet Access (HSPA), etc.

In addition, the communication between the devices in the communication system can be carried out according to the communication protocol of any stage, for example, including but not being limited to 1G (generation), 2G, 2.5G, 2.75G, 3G, 4G, 4.5G and 5G, New Radio (NR), future 6G and etc., and/or other communication protocols currently known or to be developed in the future.

In embodiments of the present application, the term "network device" refers to, for example, a device in the communication system that connects a terminal equipment to the communication network and provides services to the terminal equipment. The network device may include but is not limited to: a base station (BS), an access point (AP), a transmission reception point (TRP), a broadcast transmitter, a mobile management entity (MME), a gateway, a server, a radio network controller (RNC), a base station controller (BSC), etc.

The base station may include, but is not limited to, a node B (NodeB or NB), an evolution node B (eNodeB or eNB), 5G base station (gNB), an IAB donor, etc., and may also include a remote radio head (RRH), a remote radio unit (RRU), a relay, or a low-power node (such as femto, pico, etc.). The term "base station" may include some or all of their functions, with each base station providing communication coverage to a specific geographic area. The term "cell" can refer to a base station and/or its coverage area, depending on the context in which the term is used.

In embodiments of the present application, the term "user equipment" (UE) or "terminal equipment or terminal device" (TE) refers, for example, to a device that is connected to the communication network through the network device and receives network services. The terminal equipment can be fixed or movable, and can also be called a mobile station (MS), a terminal, a subscriber station (SS), an access terminal (AT), a station, etc.

The terminal equipment may include but is not limited to: a cellular phone, a personal digital assistant (PDA), a wireless modems, a wireless communication device, a handheld device, a machine-type communication device, a laptop computer, a cordless phone, a smart phone, a smart watch, a digital camera, etc.

For another example, in scenarios such as Internet of Things (IoT), the terminal equipment may also be a machine or an apparatus that performs monitoring or measurement, and may include, but is not limited to, a machine type communication (MTC) terminal, a vehicle communication terminal, a device to device (D2D) terminal, a machine to machine (M2M) terminal, and etc.

In addition, the term "network side" or "network device side" refers to the side of the network, which may be a base station or may include one or more network devices as described above. The term "user side" or "terminal side" or "terminal equipment side" refers to the side of the user or terminal, which may be a UE or may include one or more terminal equipments as described above. Without specifically indicated, "device" can refer to a network device or a terminal equipment.

Hereinafter the scenarios of in the embodiments of the present application are illustrated by examples, but which is not limited in the present application.

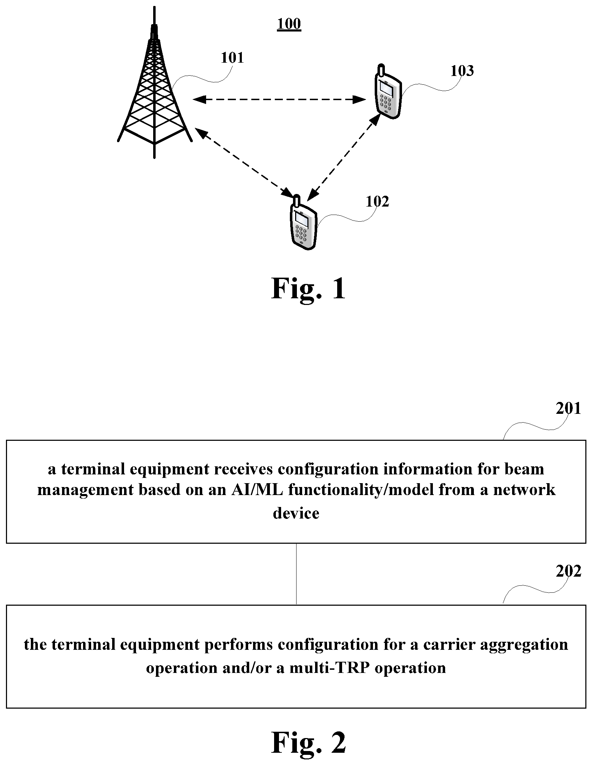

FIG. 1 is a schematic diagram of a communication system in embodiments of the present application, illustrating a case of a terminal equipment and a network device as examples. As shown in FIG. 1, a communication system 100 may include a network device 101 and terminal equipments 102 and 103. For simplicity, FIG. 1 illustrates only two terminal equipments and one network device as examples, but which is not limited in the embodiments of the present application.

In embodiments of the present application, existing services or services that may be implemented in the future may be transmitted between the network device 101 and the terminal equipments 102, 103. For example, these services may include, but are not limited to, enhanced Mobile Broadband (eMBB), massive Machine Type Communication (mMTC), and Ultra-Reliable and Low-Latency Communication (URLLC), and etc.

It is worth noting that FIG. 1 shows that two terminal equipments 102 and 103 are within a coverage of the network device 101, but which is not limited in the present application. Both of the two terminal equipments 102 and 103 may not be within a coverage of the network device 101, or one terminal equipment 102 is within the coverage of the network device 101 and the other terminal equipment 103 is outside the coverage of the network device 101.

In embodiments of the present application, a higher layer signaling may be, for example, Radio Resource Control (RRC) signaling; for example, it is called an RRC message, e.g., including MIB, system information, and a dedicated RRC message; or it is referred to as RRC information element (RRC IE). For example, the higher layer signaling can also be Medium Access Control (MAC) signaling; or is also called MAC control element (MAC CE). However, the present application is not limited to this.

In NR, a carrier aggregation operation may be configured, that is, a plurality of component carriers (CC) may be configured. In addition, since Rel-16, a multi-TRP (Transmission Reception Point) operation has been introduced, including single downlink control information (single-DCI) and multi-DCI operations. In scenarios of carrier aggregation and multi-TRP operations, further research is needed on how to configure an AI/ML functionality/model for beam management and performance monitoring.

In the embodiments of the present application, one or more AI/ML models may be configured and run in a network device and/or a terminal equipment. The AI/ML models may be used in various signal processing functions of wireless communication, such as CSI prediction, CSI compression, beam prediction and positioning management, etc. The present application is not limited to this.

### Embodiments of a First Aspect

The embodiments of the present application provide a beam management configuration method, which is illustrated from a terminal equipment side.

FIG. 2 is a schematic diagram of a beam management configuration method in embodiments of the present application, as shown in FIG. 2, the method including:
201: a terminal equipment receives configuration information for beam management based on an AI/ML functionality/model from a network device; and
202: the terminal equipment performs configuration for a carrier aggregation operation and/or a multi-TRP operation.

It is worth noting that FIG. 2 above only schematically illustrates the embodiments of the present application, but the present application is not limited to this. For example, the order of execution between operations may be adjusted appropriately, and some other operations may be added or one or more operations may be removed. Those skilled in the art may make appropriate variations in accordance with the above contents, and which is not limited to the disclosure of FIG. 2 above.

In some embodiments, functionality refers to an AI/ML feature/feature group enabled by a configuration, wherein the configuration is supported based on a condition indicated by capability of UE.

For example, an AI/ML functionality may be one or more functionalities, or one or more logic models, or one or more sub functionalities, or one or more features, or one or more feature groups.

For another example, the functionality may refer to using AI/ML for spatial beam prediction, or using AI/ML for temporal beam prediction, or using AI/ML for CSI prediction, or using AI/ML for direct positioning, or using AI/ML assisted positioning, etc.

In some embodiments, configuration information for beam management may include configuration information for one or more reference signals used for beam management or beam measurement, such as CSI-RS configuration information, etc. The present application is not limited to this, and specific configuration information may also be seen by referring to the related art.

In some embodiments, one or more reference signals are used for measurement, and measurement results are input into the AI/ML functionality/model; another one or more reference signals are used for the output of the AI/ML functionality/model to perform inference.

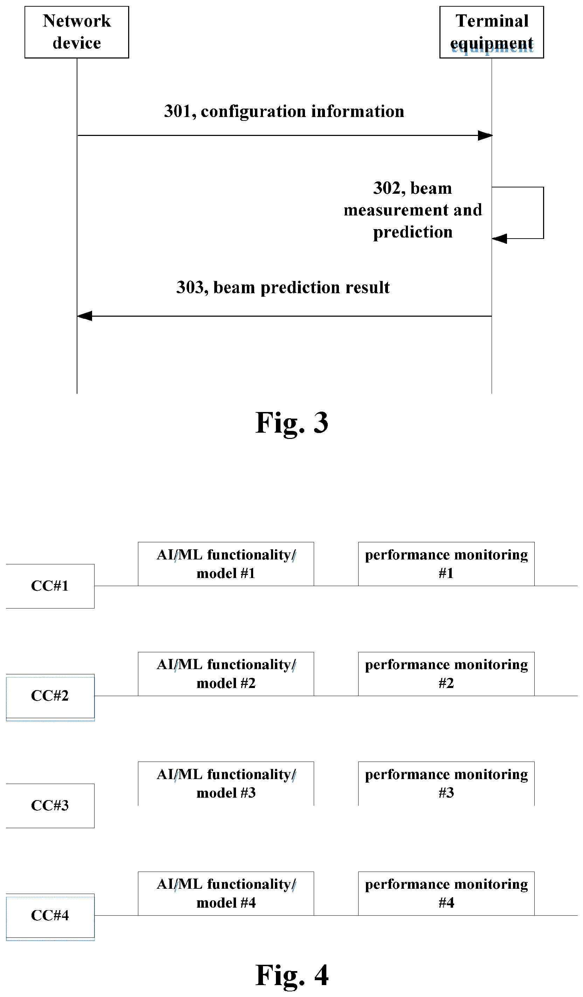

FIG. 3 is another schematic diagram of a beam management method in embodiments of the present application, which is described by taking a terminal equipment configured with AI/ML as an example. As shown in FIG. 3, the method includes:
301: a terminal equipment receives configuration information from a network device; for example, the configuration information includes a second reference signal resource set (Set B) for beam measurement and a first reference signal resource set (Set A) for beam prediction;
302: the terminal equipment performs beam measurement and inputs a result of the beam measurement into an AI/ML functionality/model; for example, the measurement result of a reference signal in the Set B is taken as an input of AI/ML, and a reference signal in the Set A is used for prediction (or referred to as inference); and
303: the terminal equipment transmits a beam prediction result to the network device.

For example, an AI/ML functionality is at a terminal equipment side. After enabling or activating the AI/ML functionality, the terminal equipment performs beam measurement based on a reference signal from a network side, performs beam prediction by using AI/ML based on a beam measurement result, and transmits a prediction result to the network device.

It is worth noting that FIG. 3 above only schematically illustrates the embodiments of the present application, but the present application is not limited to this. For example, the order of execution between operations may be adjusted appropriately, and some other operations may be added or one or more operations may be removed. Those skilled in the art may make appropriate variations in accordance with the above contents, and which is not limited to the disclosure of FIG. 3 above.

The beam management based on AI/ML has been explained schematically hereinbefore, and carrier aggregation and multi-TRP related contents will be explained hereinafter.

In some embodiments, an AI/ML functionality/model for beam management is configured per CC or per BWP.

For example, in the scenario of a multi-carrier (carrier aggregation) operation, the AI/ML functionality/model for beam management may be configured or enabled per Component Carrier (CC) or per Bandwidth Part (BWP).

In some embodiments, a second reference signal set (Set B) for measurement and/or a first reference signal set (Set A) for prediction and/or a reporting configuration are configured per CC or per BWP.

For example, in the scenario of a multi-carrier (carrier aggregation) operation, the second reference signal set (Set B) for measurement may be configured per CC or per BWP, and/or the first reference signal set (Set A) for prediction may be configured per CC or per BWP, and/or the reporting configuration may be configured per CC or per BWP.

In some embodiments, an AI/ML functionality/model is enabled for all CCs or BWPs,
or part of CCs or BWPs are configured or enabled with the AI/ML functionality/model, while other part of CCs or BWPs are not configured or enabled with the AI/ML functionality/model.

For example, in the scenario of a multi-carrier (carrier aggregation) operation, the AI/ML operation may be enabled for all CCs. For example, in the scenario of a multi-carrier (carrier aggregation) operation, some CCs are configured (enabled) with the AI/ML operation, while some other CCs are not configured (disabled) with the AI/ML operation.

In some embodiments, a second reference signal set (Set B) for measurement and/or a first reference signal set (Set A) for prediction and/or a reporting configuration are shared among all or part of CCs or BWPs configured/enabled with an AI/ML functionality/model for beam management.

For example, the reference signals (Set A and/or Set B) for measurement and/or prediction and/or the reporting configuration may be shared among all CCs (or subsets thereof) configured (enabled) with the AI/ML operation for beam management. For example, AI/ML-based cross-carrier/inter-carrier beam prediction may be applied, and/or cross-carrier reporting may be applied.

As another example, the AI/ML functionality/model for beam management is configured (enabled) on one CC, and the reference signals (Set A and/or Set B) for measurement and/or prediction and/or the reporting configuration are configured on the same CC. The predicted beam may be applied to all CCs (or a plurality of CCs).

In some embodiments, a generalized AI/ML functionality/model is configured or enabled, and the generalized AI/ML functionality/model is applied to a plurality of CCs or BWPs.

For example, a generalized AI/ML functionality/model may be configured/enabled, and may be applied to a plurality of CCs. That is, one AI/ML functionality/model is applied, and the plurality of CCs are enabled with the AI/ML operation for beam management.

As another example, whether to support the generalized AI/ML functionality/model may depend on capability of a UE.

In some embodiments, a second reference signal set (Set B) for measurement and/or a first reference signal set (Set A) for prediction and/or a reporting configuration are configured on each CC or BWP enabled with AI/ML.

In some embodiments, a second reference signal set (Set B) for measurement and/or a first reference signal set (Set A) for prediction and/or a reporting configuration are shared among all CCs or BWPs (or one or more subsets) enabled with AI/ML.

In some embodiments, an AI/ML functionality/model for beam management is configured per TRP.

For example, in the scenario of the multi-TRP operation (including single-DCI and multi-DCI operations), the AI/ML functionality/model for beam management may be configured (enabled) per TRP.

In some embodiments, a second reference signal set (Set B) for measurement and/or a first reference signal set (Set A) for prediction and/or a reporting configuration are configured per TRP.

For example, in the scenario of the multi-TRP operation, a second reference signal set (Set B) for measurement may be configured per TRP, and/or a first reference signal set (Set A) for prediction may be configured per TRP, and/or a reporting configuration may be configured per TRP.

In some embodiments, an AI/ML functionality/model is enabled for all TRPs,
or part of TRPs are configured or enabled with the AI/ML functionality/model, while other part of TRPs are not configured or enabled with the AI/ML functionality/model.

For example, in the scenario of the multi-TRP operation, the AI/ML operation may be enabled for all TRPs. As another example, in the scenario of the multi-TRP operation, some TRPs are configured (enabled) with the AI/ML operation, while some other TRPs are not configured (disabled) with the AI/ML operation.

In some embodiments, a second reference signal set (Set B) for measurement and/or a first reference signal set (Set A) for prediction and/or a reporting configuration are shared among all or part of TRPs configured/enabled with an AI/ML functionality/model for beam management.

For example, the reference signals (Set A and/or Set B) for measurement and/or prediction and/or the reporting configuration may be shared among all TRPs (or subsets thereof) configured (enabled) with the AI/ML operation for beam management. For example, one Set A and one Set B (or one Set A and two Set Bs) are configured for a plurality of TRPs, whereby beams from the plurality of TRPs may be predicted.

As another example, Set A contains RSs/beams to be predicted from the plurality of TRPs.

In some embodiments, a generalized AI/ML functionality/model is configured or enabled, and the generalized AI/ML functionality/model is applied to a plurality of TRPs.

For example, a generalized AI/ML functionality/model may be configured/enabled, and may be applied to a plurality of TRPs. That is, one AI/ML functionality/model is applied, and the plurality of TRPs are enabled with the AI/ML operation for beam management.

As another example, whether to support the generalized AI/ML functionality/model may depend on capability of a UE.

In some embodiments, a second reference signal set (Set B) for measurement and/or a first reference signal set (Set A) for prediction and/or a reporting configuration are configured on each TRP enabled with AI/ML.

In some embodiments, a second reference signal set (Set B) for measurement and/or a first reference signal set (Set A) for prediction and/or a reporting configuration are shared among all TRPs (or one or more subsets) enabled with AI/ML.

Cases of AI/ML-related carrier aggregation and/or multi-TRP configuration have been explained schematically hereinbefore, and one or more cases of AI/ML-related performance monitoring will be explained hereinafter.

In some embodiments, for multi-carrier or carrier aggregation, the number of performance monitoring processes is the same as the number of AI/ML functionalities/models configured or enabled on all carriers.

For example, in the scenario of a multi-carrier (carrier aggregation) operation, the total number of performance monitoring processes is the same as the total number of the AI/ML functionalities/models configured (enabled) on all CCs.

In some embodiments, for multi-carrier or carrier aggregation, the number of performance monitoring processes is different from the number of AI/ML functionalities/models configured or enabled on all carriers.

For example, in the scenario of a multi-carrier (carrier aggregation) operation, the total number of performance monitoring processes is different from the total number of the AI/ML functionalities/models configured (enabled) on all CCs. For example, the total number of performance monitoring processes is smaller than the total number of the configured (enabled) AI/ML functionalities/models.

In some embodiments, for multi-carrier or carrier aggregation, an AI/ML functionality/model for beam management is configured or enabled per CC or per BWP, and performance monitoring of the AI/ML functionality/model is configured or enabled per CC or per BWP.

FIG. 4 is an example diagram of configuring performance monitoring per CC in embodiments of the present application. As shown in FIG. 4, for example, if AI/ML functionality/model #1 is enabled on CC#1, performance monitoring #1 is also configured or enabled; if AI/ML functionality/model #2 is enabled on CC#2, performance monitoring #2 is also configured or enabled; if AI/ML functionality/model #3 is enabled on CC#3, performance monitoring #3 is also configured or enabled; if AI/ML functionality/model #4 is enabled on CC#4, performance monitoring #4 is also configured or enabled.

As another example, if one or more CCs (or BWPs) are configured (enabled) with the AI/ML functionality/model for beam management operation, the performance monitoring of AI/ML functionality/model is configured (enabled) on the one or more CCs (or BWPs).

In some embodiments, for multi-carrier or carrier aggregation, performance monitoring of AI/ML functionality/model is configured or enabled on some one or more CCs or BWPs; wherein the CCs or BWPs on which the performance monitoring is configured or enabled are predefined or configured.

For example, in the scenario of a multi-carrier (carrier aggregation) operation, the performance monitoring of AI/ML functionality/model is configured (enabled) on one CC or a plurality of specific CCs. Which CCs are configured (enabled) with performance monitoring may be predefined or configurable. For example, performance of an AI/ML functionality/model on one CC may represent performance of an AI/ML functionality/model on another one or more CCs.

For example, a CC with the smallest ID shall be configured (enabled) with performance monitoring. Alternatively, among the CCs configured (enabled) with AI/ML functionalities/models for beam management operations, the CC with the smallest ID shall be configured (enabled) with performance monitoring.

In some embodiments, an AI/ML functionality/model for beam management is configured or enabled on a plurality of CCs or BWPs, and performance monitoring of the AI/ML functionality/model is configured or enabled over a certain CC or BWP.

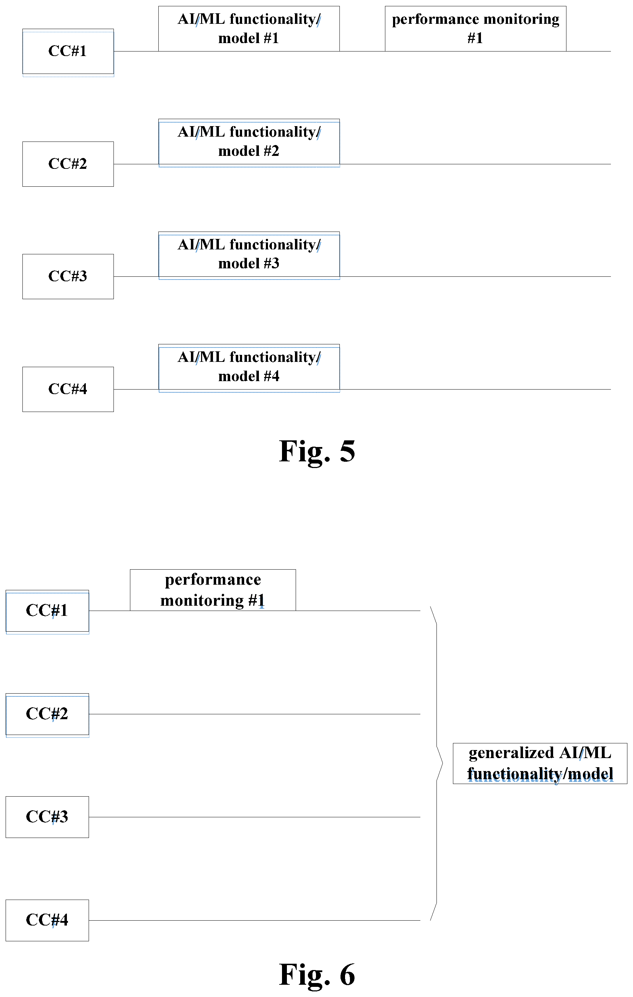

FIG. 5 is an example diagram of configuring performance monitoring by a specific CC in embodiments of the present application. As shown in FIG. 5, for example, AI/ML functionality/model #1 is enabled on CC#1, AI/ML functionality/model #2 is enabled on CC#2, AI/ML functionality/model #3 is enabled on CC#3, and AI/ML functionality/model #4 is enabled on CC#4.

As shown in FIG. 5, the AI/ML functionality/model for beam management may be configured (enabled) on a plurality of CCs. And performance monitoring is configured over one specific CC. For example, the CC with the smallest ID (CC#1) is configured or enabled with performance monitoring #1.

In some embodiments, a generalized AI/ML functionality/model is configured or enabled, and the generalized AI/ML functionality/model is applied to a plurality of CCs or BWPs, and performance monitoring of the AI/ML functionality/model is configured or enabled over some one or more CCs or BWPs.

For example, the AI/ML functionality/model for beam management is applied to a plurality of CCs, and is trained using data from all CCs for example. In this case, AI/ML for beam management may be enabled on a plurality of CCs, and performance monitoring may be configured over one specific CC. For example, performance monitoring is configured or enabled over the CC with the smallest ID.

As another example, whether to support the generalized AI/ML functionality/model may depend on capability of a UE.

FIG. 6 is an example diagram of configuring performance monitoring by one CC in embodiments of the present application. As shown in FIG. 6, for example, a generalized AI/ML functionality/model is enabled on CC#1, CC#2, CC#3, and CC#4, and performance monitoring #1 is configured or enabled over the CC with the smallest ID (CC#1).

In another example, performance monitoring may be configured over e.g., each CC (or one or more subsets thereof). If performance on one CC (or all CCs) fails, performance of the AI/ML functionality/model also fails.

In some embodiments, for multi-carrier or carrier aggregation, AI/ML functionalities/models for beam management are divided into a plurality of groups, each group is configured or enabled over one or more CCs or BWPs, and performance monitoring of an AI/ML functionality/model for each group is configured or enabled over a certain one or more CCs or BWPs; wherein the CC or BWP that is configured or enabled with performance monitoring is predefined or configured.

For example, the AI/ML functionalities/models may be divided into a plurality of groups. For instance, one group corresponds to AI/ML functionalities/models on one or more CCs. In each group, performance monitoring of AI/ML functionalities/models is configured (enabled) via one or more specific CCs. Which CCs are configured (enabled) with performance monitoring may be predefined or configurable. For example, a CC with the smallest ID in a group shall be configured (enabled) with performance monitoring.

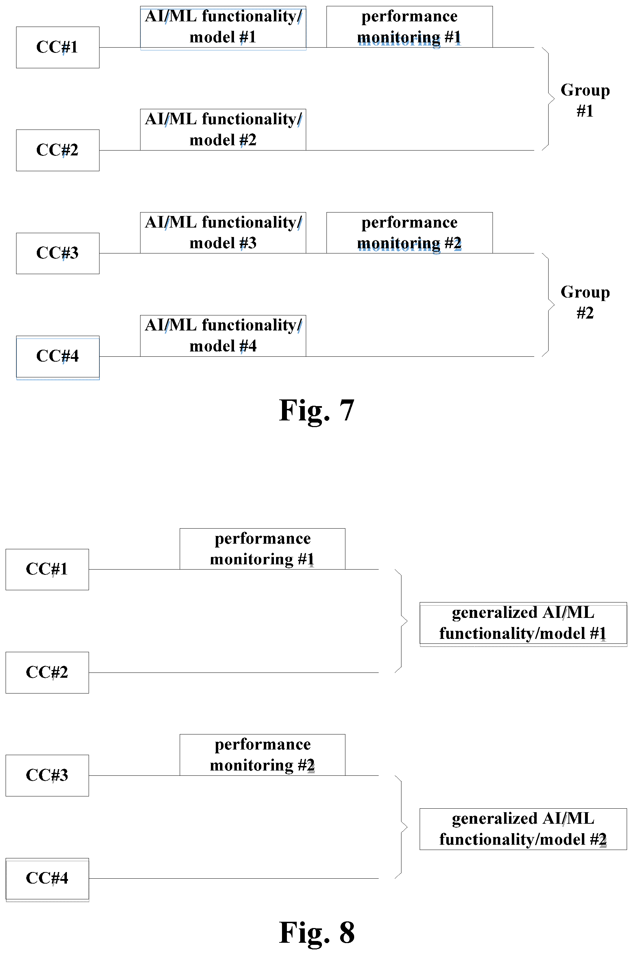

FIG. 7 is an example diagram of configuring performance monitoring per CC based on grouping in embodiments of the present application. As shown in FIG. 7, for example, CC#1 and CC#2 belong to Group #1, while CC#3 and CC#4 belong to Group #2; AI/ML functionality/model #1 is enabled on CC#1, AI/ML functionality/model #2 is enabled on CC#2, AI/ML functionality/model #3 is enabled on CC#3, and AI/ML functionality/model #4 is enabled on CC#4. As shown in FIG. 7, in Group #1, performance monitoring #1 is configured or enabled over the CC with the smallest ID (CC#1). In Group #2, performance monitoring #2 is configured or enabled over the CC with the smallest ID (CC#3).

As another example, the AI/ML functionalities/models may be divided into a plurality of groups. For instance, one group corresponds to a generalized AI/ML functionality/model on one or more CCs. In each group, performance monitoring of AI/ML functionalities/models is configured (enabled) via one or more specific CCs. Which CCs are configured (enabled) with performance monitoring may be predefined or configurable. For example, a CC with the smallest ID in the group shall be configured (enabled) with performance monitoring.

FIG. 8 is an example diagram of configuring performance monitoring per CC based on grouping in the embodiments of the present application. As shown in FIG. 8, for example, CC#1 and CC#2 belong to Group #1, and the generalized AI/ML functionality/model #1 is enabled; CC#3 and CC#4 belong to Group #2, and the generalized AI/ML functionality/model #2 is enabled. As shown in FIG. 8, in Group #1, performance monitoring #1 is configured or enabled over the CC with the smallest ID (CC#1). In Group #2, performance monitoring #2 is configured or enabled over the CC with the smallest ID (CC#3).

In some embodiments, for multi-TRP, the number of performance monitoring processes is the same as the number of the AI/ML functionalities/models configured or enabled on all TRPs.

For example, in the scenario of a multi-TRP operation (including single-DCI and/or multi-DCI operations), the total number of performance monitoring processes is the same as the total number of the AI/ML functionalities/models configured (enabled) on all TRPs.

In some embodiments, for multi-TRP, the number of performance monitoring processes is different from the number of the AI/ML functionalities/models configured or enabled on all TRPs.

For example, in the scenario of a multi-TRP operation (including single-DCI and/or multi-DCI operations), the total number of performance monitoring processes is different from the total number of the AI/ML functionalities/models configured (enabled) on all TRPs. For example, the total number of performance monitoring processes may be smaller than the total number of the configured (enabled) AI/ML functionalities/models.

In some embodiments, for multi-TRP, an AI/ML functionality/model for beam management is configured or enabled per TRP, and performance monitoring of the AI/ML functionality/model is configured or enabled per TRP.

For example, in the scenario of a multi-TRP operation (including single-DCI and/or multi-DCI operations), if the AI/ML functionality/model for beam management is configured (enabled) per TRP, the performance monitoring of the AI/ML functionality/model is configured (enabled) per TRP.

As another example, if a TRP is configured (enabled) with the AI/ML functionality/model for beam management operation, the TRP is configured (enabled) with the performance monitoring of AI/ML functionality/model. Alternatively, for a UE-side model, the AI/ML functionality/model associated with each TRP shall be configured (enabled) with performance monitoring.

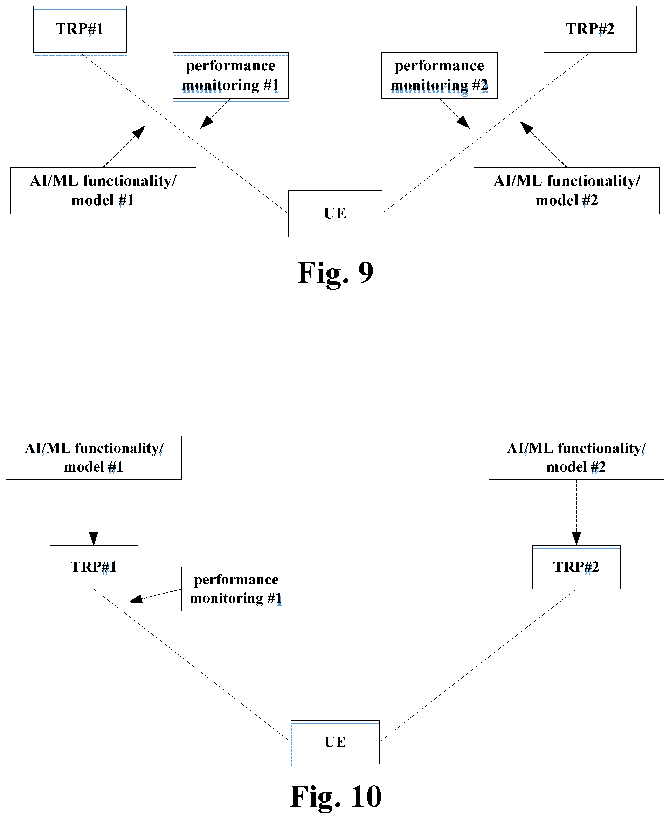

FIG. 9 is an example diagram of configuring performance monitoring per TRP in the embodiments of the present application. As shown in FIG. 9, for example, a UE is configured or enabled with AI/ML functionality/model #1 in association with TRP #1, and is configured or enabled with AI/ML functionality/model #2 in association with TRP #2. Correspondingly, performance monitoring #1 is enabled for the AI/ML functionality/model #1, and performance monitoring #2 is enabled for the AI/ML functionality/model #2.

In some embodiments, for multi-TRP, performance monitoring of an AI/ML functionality/model is configured or enabled over a certain one or more TRPs; wherein the TRP that is configured or enabled with performance monitoring is predefined or configured.

For example, in the scenario of a multi-TRP operation (including single-DCI and/or multi-DCI operations), the performance monitoring of AI/ML functionality/model is configured (enabled) over one TRP or a plurality of specific TRPs. Which TRPs are configured (enabled) with performance monitoring may be predefined or configurable.

For example, performance of an AI/ML functionality/model on one TRP may represent performance of the AI/ML functionality/model on another TRP. For example, the first one TRP (or the first one of a plurality of TRPs configured/enabled with AI/ML functionalities/models for beam management operations) is configured (enabled) with performance monitoring. Alternatively, for a UE-side model, the AI/ML functionality/model associated with the first one TRP shall be configured (enabled) with performance monitoring.

In some embodiments, for a network-side model, an AI/ML functionality/model for beam management is configured or enabled over a plurality of TRPs, and performance monitoring of the AI/ML functionality/model is configured or enabled over a certain TRP.

FIG. 10 is an example diagram of configuring performance monitoring by a specific TRP in embodiments of the present application. As shown in FIG. 10, for a network-side model as an example, AI/ML functionalities/models for beam management may be configured (enabled) over a plurality of TRPs. For example, TRP#1 enables AI/ML functionality/model #1, and TRP#2 enables AI/ML functionality/model #2. As shown in FIG. 10, performance monitoring is configured over one specific TRP, and for example, performance monitoring #1 is configured over TRP #1.

In some embodiments, for a terminal-side model, a generalized AI/ML functionality/model is configured or enabled, and the generalized AI/ML functionality/model is applied to a plurality of TRPs, and performance monitoring of the AI/ML functionality/model is configured or enabled for a certain TRP.

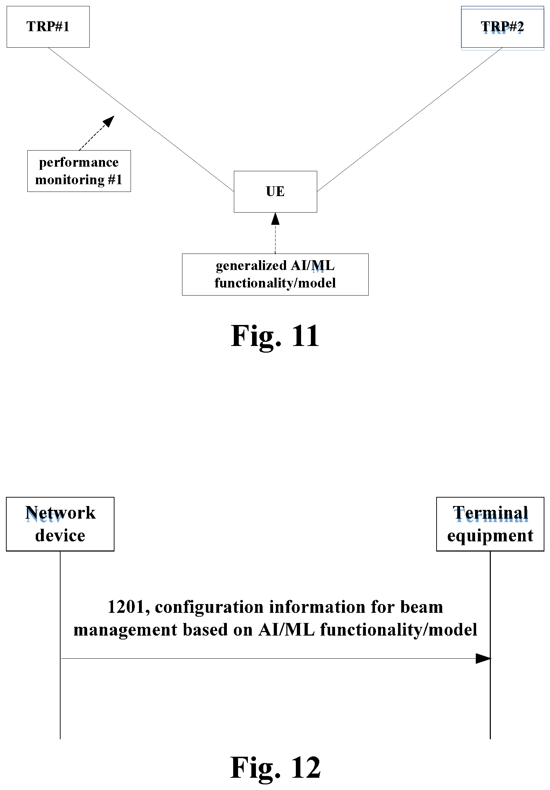

FIG. 11 is an example diagram of configuring performance monitoring by a specific TRP in embodiments of the present application. As shown in FIG. 11, for a UE-side model as an example, an AI/ML functionality/model for beam management is universally applied to a plurality of TRPs, and the generalized AI/ML functionality/model is trained using data from all TRPs. In this case, the AI/ML used for beam management operation may be applied to communications with a plurality of TRPs. In one example, whether to support the generalized AI/ML functionality/model may depend on capability of a UE. As shown in FIG. 11, performance monitoring may target the AI/ML operation of one TRP. For example, TRP #1 is configured or enabled with performance monitoring #1.

The embodiments of the present application may be applied to a UE-side model and/or a gNB-side model. In addition, the embodiments of the present application may be applied to BM case 1 (spatial beam prediction) and/or BM case 2 (temporal beam prediction).

The embodiments above only schematically illustrate the present application, but the present application is not limited to this, and appropriate variations may also be made on the basis of the above embodiments. For example, the above embodiments may be used separately, or one or more of the above embodiments may be combined.

It can be seen from the above embodiments that the terminal equipment receives configuration information for beam management based on the AI/ML functionality/model from the network device, and performs configuration for a carrier aggregation operation and/or a multi-TRP operation, thereby being able to improve the efficiency of beam management and enhance the accuracy and reliability of beam management.

### Embodiments of a Second Aspect

The embodiments of the present application provide a beam management configuration method, which is illustrated from a network device side. The embodiments of the second aspect may be combined with the embodiments of the first aspect, and the same content as the embodiments of the first aspect will not be repeated.

FIG. 12 is another schematic diagram of a beam management configuration method in embodiments of the present application, as shown in FIG. 12, the method including:
1201: a network device transmits configuration information for beam management based on an AI/ML functionality/model to a terminal equipment; wherein the terminal equipment performs configuration for a carrier aggregation operation and/or a multi-TRP operation.

The embodiments above only schematically illustrate the present application, but the present application is not limited to this, and appropriate variations may also be made on the basis of the above embodiments. For example, the above embodiments may be used separately, or one or more of the above embodiments may be combined.

It can be seen from the above embodiments that the terminal equipment receives configuration information for beam management based on the AI/ML functionality/model from the network device, and performs configuration for a carrier aggregation operation and/or a multi-TRP operation, thereby being able to improve the efficiency of beam management and enhance the accuracy and reliability of beam management.

### Embodiments of a Third Aspect

The embodiments of the present application provide a beam management configuration apparatus. The apparatus may be, for example, a terminal equipment, or one or more parts or components configured in the terminal equipment, and the same content as the embodiments of the first and second aspects will not be repeated.

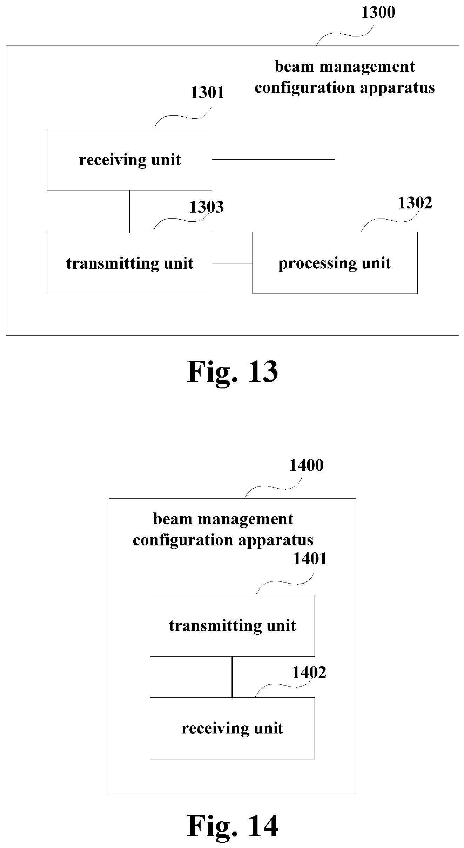

FIG. 13 is another schematic diagram of a beam management configuration apparatus in embodiments of the present application, as shown in FIG. 13, the beam management configuration apparatus 1300 in the embodiments of the present application including:
a receiving unit 1301 configured to receive configuration information for beam management based on an AI/ML functionality/model from a network device; and
a processing unit 1302 configured to perform configuration for carrier aggregation operation and/or a multi-TRP operation.

In some embodiments, the AI/ML functionality/model for beam management is configured per CC or per BWP.

In some embodiments, a second reference signal set (Set B) for measurement and/or a first reference signal set (Set A) for prediction and/or a reporting configuration are configured per CC or per BWP.

In some embodiments, the AI/ML functionality/model is enabled for all CCs or BWPs.

In some embodiments, part of CCs or BWPs are configured or enabled with the AI/ML functionality/model, while other part of CCs or BWPs are not configured or enabled with the AI/ML functionality/model.

In some embodiments, a second reference signal set (Set B) for measurement and/or a first reference signal set (Set A) for prediction and/or a reporting configuration are shared among all or part of CCs or BWPs configured/enabled with the AI/ML functionality/model for beam management.

In some embodiments, a generalized AI/ML functionality/model is configured or enabled, and the generalized AI/ML functionality/model is applied to a plurality of CCs or BWPs.

In some embodiments, a second reference signal set (Set B) for measurement and/or a first reference signal set (Set A) for prediction and/or a reporting configuration are configured on each CC or BWP enabled with AI/ML.

In some embodiments, a second reference signal set (Set B) for measurement and/or a first reference signal set (Set A) for prediction and/or a reporting configuration are shared among all CCs or BWPs enabled with AI/ML.

In some embodiments, the AI/ML functionality/model for beam management is configured per TRP.

In some embodiments, a second reference signal set (Set B) for measurement and/or a first reference signal set (Set A) for prediction and/or a reporting configuration are configured per TRP.

In some embodiments, the AI/ML functionality/model is enabled for all TRPs.

In some embodiments, part of TRPs are configured or enabled with the AI/ML functionality/model, while other part of TRPs are not configured or enabled with the AI/ML functionality/model.

In some embodiments, a second reference signal set (Set B) for measurement and/or a first reference signal set (Set A) for prediction and/or a reporting configuration are shared among all or part of TRPs configured/enabled with the AI/ML functionality/model for beam management.

In some embodiments, a generalized AI/ML functionality/model is configured or enabled, and the generalized AI/ML functionality/model is applied to a plurality of TRPs.

In some embodiments, a second reference signal set (Set B) for measurement and/or a first reference signal set (Set A) for prediction and/or a reporting configuration are configured on each TRP enabled with AI/ML.

In some embodiments, a second reference signal set (Set B) for measurement and/or a first reference signal set (Set A) for prediction and/or a reporting configuration are shared among all TRPs enabled with AI/ML.

In some embodiments, for multi-carrier or carrier aggregation, the number of performance monitoring processes is the same as the number of AI/ML functionalities/models configured or enabled on all carriers.

In some embodiments, the number of performance monitoring processes is different from the number of AI/ML functionalities/models configured or enabled on all carriers.

In some embodiments, for multi-carrier or carrier aggregation, the AI/ML functionality/model for beam management is configured or enabled per CC or per BWP, and performance monitoring of the AI/ML functionality/model is configured or enabled per CC or per BWP.

In some embodiments, for multi-carrier or carrier aggregation, the performance monitoring of AI/ML functionality/model is configured or enabled on some one or more CCs or BWPs; wherein the CCs or BWPs on which the performance monitoring is configured or enabled are predefined or configured.

In some embodiments, the AI/ML functionality/model for beam management is configured or enabled on a plurality of CCs or BWPs, and the performance monitoring of the AI/ML functionality/model is configured or enabled over a certain CC or BWP.

In some embodiments, a generalized AI/ML functionality/model is configured or enabled, and the generalized AI/ML functionality/model is applied to a plurality of CCs or BWPs, and the performance monitoring of the AI/ML functionality/model is configured or enabled over a certain one CC or BWP.

In some embodiments, for multi-carrier or carrier aggregation, AI/ML functionalities/models for beam management are divided into a plurality of groups, each group is configured or enabled over one or more CCs or BWPs, and performance monitoring of an AI/ML functionality/model for each group is configured or enabled over a certain one or more CCs or BWPs; wherein the CC or BWP that is configured or enabled with performance monitoring is predefined or configured.

In some embodiments, for multi-TRP, the number of performance monitoring processes is the same as the number of AI/ML functionalities/models configured or enabled on all TRPs.

In some embodiments, the number of performance monitoring processes is different from the number of AI/ML functionalities/models configured or enabled on all TRPs.

In some embodiments, for multi-TRP, the AI/ML functionality/model for beam management is configured or enabled per TRP, and the performance monitoring of the AI/ML functionality/model is configured or enabled per TRP.

In some embodiments, for multi-TRP, the performance monitoring of the AI/ML functionality/model is configured or enabled over a certain one or more TRPs; wherein the TRP that is configured or enabled with performance monitoring is predefined or configured.

In some embodiments, for a network-side model, the AI/ML functionality/model for beam management is configured or enabled over a plurality of TRPs, and the performance monitoring of the AI/ML functionality/model is configured or enabled over a certain TRP.

In some embodiments, for a terminal-side model, a generalized AI/ML functionality/model is configured or enabled, and the generalized AI/ML functionality/model is applied to a plurality of TRPs, and the performance monitoring of the AI/ML functionality/model is configured or enabled for a certain TRP.

In some embodiments, as shown in FIG. 13, the beam management configuration apparatus 1300 may further include:
a transmitting unit 1303 configured to transmit beam measurement information and/or beam prediction information to a network device.

The embodiments above only schematically illustrate the present application, but the present application is not limited to this, and appropriate variations may also be made on the basis of the above embodiments. For example, the above embodiments may be used separately, or one or more of the above embodiments may be combined.

It is worth noting that only the components or modules related to the present application are illustrated hereinbefore, but the present application is not limited to this. The beam management configuration apparatus 1300 may further include other components or modules, and the details of these components or modules can be seen by referring to the related art.

In addition, for the sake of simplicity, FIG. 13 only illustratively shows the connection relationship or signal trend between the individual components or modules, but it should be clear to those skilled in the art that various related techniques such as bus connections may be employed. The above individual components or modules can be implemented by hardware facilities such as a processor, a memory, a transmitter, a receiver, etc., which is not limited in the present application.

It can be seen from the above embodiments that the terminal equipment receives configuration information for beam management based on the AI/ML functionality/model from the network device, and performs configuration for a carrier aggregation operation and/or a multi-TRP operation, thereby being able to improve the efficiency of beam management and enhance the accuracy and reliability of beam management.

### Embodiments of a Fourth Aspect

The embodiments of the present application provide a beam management configuration apparatus. The apparatus may be, for example, a network device, or one or more parts or components configured in the network device, and the same content as the embodiment of the first to third aspects will not be repeated.

FIG. 14 is another schematic diagram of a beam management configuration apparatus in the embodiments of the present application, as shown in FIG. 14, the beam management configuration apparatus 1400 including:
a transmitting unit 1401 configured to transmit configuration information for beam management based on an AI/ML functionality/model to a terminal equipment; wherein the terminal equipment performs configuration for a carrier aggregation operation and/or a multi-TRP operation.

In some embodiments, as shown in FIG. 14, the beam management configuration apparatus 1400 may further include:
a receiving unit 1402 configured to receive the beam measurement information and/or the beam prediction information transmitted by the terminal equipment.

The embodiments above only schematically illustrate the present application, but the present application is not limited to this, and appropriate variations may also be made on the basis of the above embodiments. For example, the above embodiments may be used separately, or one or more of the above embodiments may be combined.

It is worth noting that only the components or modules related to the present application are illustrated hereinbefore, but the present application is not limited to this. The beam management configuration apparatus 1400 may further include other components or modules, and the details of these components or modules can be seen by referring to the related art.

In addition, for the sake of simplicity, FIG. 14 only illustratively shows the connection relationship or signal trend between the individual components or modules, but it should be clear to those skilled in the art that various related techniques such as bus connections may be employed. The above individual components or modules can be implemented by hardware facilities such as a processor, a memory, a transmitter, a receiver, etc., which is not limited in the present application.

It can be seen from the above embodiments that the terminal equipment receives configuration information for beam management based on the AI/ML functionality/model from the network device, and performs configuration for a carrier aggregation operation and/or a multi-TRP operation, thereby being able to improve the efficiency of beam management and enhance the accuracy and reliability of beam management.

### Embodiments of a Fifth Aspect

The embodiments of the present application further provide a communication system, referring to FIG. 1, the same content as the embodiments in the first to fourth aspects will not be repeated.

In some embodiments, the communication system 100 may at least include:
a network device configured to transmit configuration information for beam management based on an AI/ML functionality/model to a terminal equipment;
the terminal equipment configured to receive the configuration information for beam management based on the AI/ML functionality/model, and perform configuration for a carrier aggregation operation and/or a multi-TRP operation.

The embodiments of the present application further provide a terminal equipment, but which is not limited in the present application, and can also be other devices.

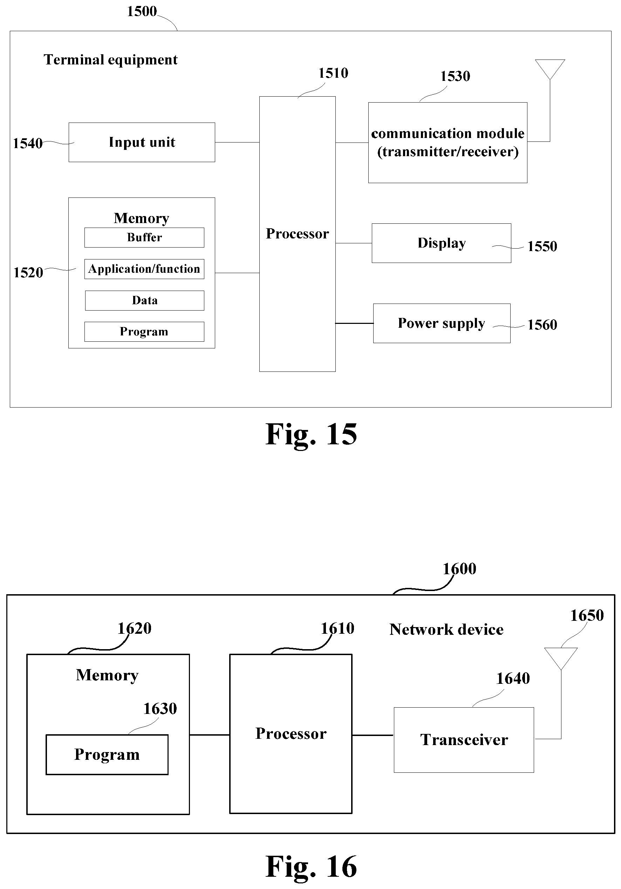

FIG. 15 is a schematic diagram of a terminal equipment in embodiments of the present application. As shown in FIG. 15, the terminal equipment 1500 may include a processor 1510 and a memory 1520; the memory 1520 stores data and program, and is coupled to the processor 1510. It is worth noting that this figure is exemplary; other types of structures may also be used in addition to or instead of the structure to implement telecommunications functions or other functions.

For example, the processor 1510 may be configured to execute the program to implement the beam management configuration method as described in the embodiments of the first aspect. For example, the processor 1510 may be configured to perform the following control of: receiving configuration information for beam management based on an AI/ML functionality/model, and performing configuration for a carrier aggregation operation and/or a multi-TRP operation.

As shown in FIG. 15, the terminal equipment 1500 may further include a communication module 1530, an input unit 1540, a display 1550, and a power supply 1560. The functions of the above components are similar to the relevant art, and will not be repeated here. It is worth noting that the terminal equipment 1500 is not necessarily required to include all of the components shown in FIG. 15, and the above components are not essential; in addition, the terminal equipment 1500 may further include components not shown in FIG. 15, with reference to the relevant art.

The embodiments of the present application further provide a network device, which may be, for example, a base station, but which is not limited in the present application, and may also be other network devices.

FIG. 16 is a schematic diagram of composition of the network device in embodiments of the present application. As shown in FIG. 16, the network device 1600 may include a processor 1610 (such as a central processing unit (CPU)) and a memory 1620; the memory 1620 is coupled to the processor 1610. The memory 1620 may store various data and also may store a program 1630 for information processing, and the program 1630 is executed under the control of the processor 1610.

For example, the processor 1610 may be configured to execute the program to implement the beam management configuration method as described in the embodiments of the second aspect. For example, the processor 1610 may be configured to perform the following control of: transmitting configuration information for beam management based on an AI/ML functionality/model to a terminal equipment; wherein the terminal equipment performs configuration for a carrier aggregation operation and/or a multi-TRP operation.

In addition, as shown in FIG. 16, the network device 1600 may further include: a transceiver 1640 and an antenna 1650, etc.; wherein the functionalities of the above components are similar to the relevant art, and will not be repeated here. It is worth noting that the network device 1600 is not necessarily required to include all of the components shown in FIG. 16; in addition, the network device 1600 may further include components not shown in FIG. 16, with reference to the relevant art.

The embodiments of the present application further provide a computer program which, when being executed in the terminal equipment, causes the terminal equipment to execute the beam management configuration method described in the embodiments of the first aspect.

The embodiments of the present application further provide a storage medium storing a computer program which causes the terminal equipment to execute the beam management configuration method described in the embodiments of the first aspect.

The embodiments of the present application further provide a computer program which, when being executed in the network device, causes the network device to execute the beam management configuration method described in the embodiments of the second aspect.

The embodiments of the present application further provide a storage medium storing a computer program which causes the network device to execute the beam management configuration method described in the embodiments of the second aspect.

The above apparatuses and methods of the present application can be implemented by hardware or by hardware combined with software. Th present disclosure relates to a computer readable program which, when being executed by a logic unit, enables the logic unit to implement the apparatuses or components mentioned above, or enables the logic unit to implement the methods or steps described above. The present application also relates to storage medium for storing the above programs, such as a hard disk, a magnetic disk, a compact disc, a DVD, a flash memory, etc.

The method/apparatus described in conjunction with the embodiments of the present application may be directly embodied as hardware, a software module executed by the processor, or a combination of both. For example, one or more of the functional block diagrams and/or combination thereof shown in the drawing may correspond to both software modules and hardware modules of the computer program flow. These software modules can correspond to the steps shown in the drawings respectively. These hardware modules can be realized, for example, by solidifying these software modules using field programmable gate arrays (FPGA).

The software module may reside in an RAM memory, a flash memory, an ROM memory, an EPROM memory, an EEPROM memory, a register, a hard disk, a removable disk, a CD-ROM, or a storage medium in any other form known in the art. A storage medium can be coupled to a processor so that the processor can read information from the storage medium and write information to the storage medium; or the storage medium can be a constituent part of the processor. The processor and the storage medium can be located in the ASIC. The software module can be stored in the memory of the mobile terminal or in a memory card that can be inserted into the mobile terminal. For example, if a device (such as a mobile terminal) uses a large-capacity MEGA-SIM card or a large-capacity flash memory device, the software module can be stored in the MEGA-SIM card or the large-capacity flash memory device.

One or more of the functional blocks and/or combination thereof shown in the drawing may be implemented as a general-purpose processor, a digital signal processor (DSP), an application-specific integrated circuit (ASIC), a field programmable gate array (FPGA) or other programmable logic device, a discrete gate or a transistor logic device, a discrete hardware component, or any appropriate combination thereof, for performing the functions described in the present application. One or more of the functional blocks and/or combination thereof shown in the drawing may also be implemented as combination of computing devices, such as combination of DSP and a microprocessor, multiple microprocessors, one or more microprocessors combined with DSP communication, or any other such configuration.

The present application is described in combination with specific embodiments hereinabove, but a person skilled in the art should know clearly that the description is exemplary, but not limitation to the protection scope of the present application. A person skilled in the art can make various variations and modifications to the present application according to principle of the application, and these variations and modifications should also be within the scope of the present application.

For implementation including the above embodiments, the following supplements are further disclosed:
1. A beam management configuration method, including:
   receiving, by a terminal equipment, configuration information for beam management based on an AI/ML functionality/model from a network device; and
   performing, by the terminal equipment, configuration for a carrier aggregation operation and/or a multi-TRP operation.
2. A beam management configuration method, including:
   transmitting, by a network device, configuration information for beam management based on an AI/ML functionality/model to a terminal equipment; wherein the terminal equipment performs configuration for a carrier aggregation operation and/or a multi-TRP operation.
3. A terminal equipment including a memory storing a computer program and a processor configured to execute the computer program to implement the beam management configuration method according to the supplement 1.
4. A network device including a memory storing a computer program and a processor configured to execute the computer program to implement the beam management configuration method according to the supplement 2.

## Claims

1. A beam management configuration apparatus, comprising:
a receiving unit configured to receive configuration information for beam management based on an AI/ML functionality/model from a network device; and
a processing unit configured to perform configuration for carrier aggregation operation and/or multi-TRP operation.

2. The apparatus according to claim 1, wherein the AI/ML functionality/model for beam management is configured per CC or per BWP;
a second reference signal set for measurement and/or a first reference signal set for prediction and/or a reporting configuration are/is configured per CC or per BWP;
the AI/ML functionality/model is enabled for all CCs or BWPs, or part of CCs or BWPs are configured or enabled with the AI/ML functionality/model, while other part of CCs or BWPs are not configured or enabled with the AI/ML functionality/model.

3. The apparatus according to claim 1, wherein a second reference signal set for measurement and/or a first reference signal set for prediction and/or a reporting configuration are/is shared among all or part of CCs or BWPs configured/enabled with the AI/ML functionality/model for beam management.

4. The apparatus according to claim 1, wherein a generalized AI/ML functionality/model is configured or enabled, and the generalized AI/ML functionality/model is applied to a plurality of CCs or BWPs.

5. The apparatus according to claim 4, wherein a second reference signal set for measurement and/or a first reference signal set for prediction and/or a reporting configuration are/is configured per CC or BWP enabled with AI/ML, or a second reference signal set for measurement and/or a first reference signal set for prediction and/or a reporting configuration are/is shared among all CCs or BWPs enabled with AI/ML.

6. The apparatus according to claim 1, wherein the AI/ML functionality/model for beam management is configured per TRP;
a second reference signal set for measurement and/or a first reference signal set for prediction and/or a reporting configuration are/is configured per TRP;
the AI/ML functionality/model is enabled for all TRPs, or part of TRPs are configured or enabled with the AI/ML functionality/model, while other part of TRPs are not configured or enabled with the AI/ML functionality/model.

7. The apparatus according to claim 1, wherein a second reference signal set for measurement and/or a first reference signal set for prediction and/or a reporting configuration are/is shared among all or part of TRPs configured/enabled with the AI/ML functionality/model for beam management.

8. The apparatus according to claim 1, wherein a generalized AI/ML functionality/model is configured or enabled, and the generalized AI/ML functionality/model is applied to a plurality of TRPs.

9. The apparatus according to claim 8, wherein a second reference signal set for measurement and/or a first reference signal set for prediction and/or a reporting configuration are/is configured per TRP enabled with AI/ML, or a second reference signal set for measurement and/or a first reference signal set for prediction and/or a reporting configuration are/is shared among all TRPs enabled with AI/ML.

10. The apparatus according to claim 1, wherein for multi-carrier or carrier aggregation, the number of performance monitoring processes is the same as the number of configured or enabled AI/ML functionalities/models across all carriers, or the number of performance monitoring processes is different from the number of configured or enabled AI/ML functionalities/models across all carriers.

11. The apparatus according to claim 1, wherein for multi-carrier or carrier aggregation, the AI/ML functionality/model for beam management is configured or enabled per CC or BWP, and performance monitoring of the AI/ML functionality/model is configured or enabled per CC or BWP.

12. The apparatus according to claim 1, wherein for multi-carrier or carrier aggregation, performance monitoring of the AI/ML functionality/model is configured or enabled over one or more CCs or BWPs;
wherein CC or BWP that is configured or enabled with performance monitoring is predefined or configured.

13. The apparatus according to claim 12, wherein the AI/ML functionality/model for beam management is configured or enabled on a plurality of CCs or BWPs, and the performance monitoring of the AI/ML functionality/model is configured or enabled over a certain CC or BWP.

14. The apparatus according to claim 12, wherein a generalized AI/ML functionality/model is configured or enabled, and the generalized AI/ML functionality/model is applied to a plurality of CCs or BWPs, and the performance monitoring of the AI/ML functionality/model is configured or enabled over a certain CC or BWP.

15. The apparatus according to claim 1, wherein for multi-carrier or carrier aggregation, AI/ML functionalities/models for beam management are divided into a plurality of groups, each group is configured or enabled over one or more CCs or BWPs, and performance monitoring of an AI/ML functionality/model for each group is configured or enabled over a certain one or more CCs or BWPs;
wherein CC or BWP that is configured or enabled with performance monitoring is predefined or configured.

16. The apparatus according to claim 1, wherein for multi-TRP, the number of performance monitoring processes is the same as the number of configured or enabled AI/ML functionalities/models across all TRPs, or the number of performance monitoring processes is different from the number of configured or enabled AI/ML functionalities/models across all TRPs.

17. The apparatus according to claim 1, wherein for multi-TRP, the AI/ML functionality/model for beam management is configured or enabled per TRP, and performance monitoring of the AI/ML functionality/model is configured or enabled per TRP.

18. The apparatus according to claim 1, wherein for multi-TRP, performance monitoring of the AI/ML functionality/model is configured or enabled over a certain one or more TRPs; wherein a TRP that is configured or enabled with performance monitoring is predefined or configured;
for a network side model, the AI/ML functionality/model for beam management is configured or enabled over a plurality of TRPs, and performance monitoring of the AI/ML functionality/model is configured or enabled over a certain TRP;
for a terminal side model, a generalized AI/ML functionality/model is configured or enabled, and the generalized AI/ML functionality/model is applied to a plurality of TRPs, and performance monitoring of the AI/ML functionality/model is configured or enabled for a certain TRP.

19. A beam management configuration apparatus, comprising:
a transmitting unit configured to transmit configuration information for beam management based on AI/ML functionalities/models to a terminal equipment; wherein the terminal equipment performs configuration for carrier aggregation operation and/or multi-TRP operation.

20. A communication system, comprising:
a network device configured to transmit configuration information for beam management based on an AI/ML functionality/model to a terminal equipment; and
the terminal equipment configured to receive the configuration information for beam management based on the AI/ML functionality/model, and perform configuration for carrier aggregation operation and/or multi-TRP operation.
